# EUROPEAN PATENT APPLICATION

(11) **EP 4 822 203 A1**
(43) Date of publication of application: **14.10.2026**
(21) Application number: 25168780.2
(22) Date of filing: 07.04.2025
(51) Int. Cl.: F16D 55/22, F16D 65/00, F16D 65/12

(54) **PARTICLE TRAPPING ARRANGEMENT FOR A DISC BRAKE OF A VEHICLE, IN PARTICULAR UTILITY VEHICLE, DISC BRAKE, BRAKING SYSTEM, AND VEHICLE**

(71) Applicant: ZF CV Systems Europe BV, 1170 Brüssel (BE)
(72) Inventor: STRZALA, Wieslaw, 46-220 Byczyna (PL)
(74) Representative: Ohlendorf, Henrike

(57) **Abstract**

Particle trapping arrangement (100) for a disc brake (250) of a vehicle (200a), in particular utility vehicle (200b); wherein the particle trapping arrangement (100) comprises a brake cover (210) adapted to be mounted on a brake carrier (260) of the disc brake (250) and/or on a brake caliper (270) of the disc brake (250); the brake cover (210) is adapted to at least partially encapsulate a brake rotor (280), the brake caliper (270) and/or brake pads (275) of the disc brake (250); the brake cover (210) comprises a lateral surface (215), wherein the lateral surface (215) is extended along a rotation axis (A) of the brake rotor (280) and is extended at least partially along a circumferential direction (C) of the brake rotor (280); the brake cover (210) comprises a trapping structure (220) arranged on a radially inner side (216) of the lateral surface (215); and the trapping structure (220) comprises a plurality of radially inwardly extended projections (225) adapted to trap brake particles.

## Description

The disclosure relates to a particle trapping arrangement for a disc brake of a vehicle, in particular utility vehicle. The disclosure also relates to a disc brake for a vehicle, in particular utility vehicle, to a braking system for a vehicle, in particular utility vehicle, and to a vehicle, in particular utility vehicle.

Disc brakes are known in the prior art. Therein, such a disc brake typically comprises a pair of brake pads and a brake rotor with a ring-shaped braking surface that is adapted to rotate relative to the pair of brake pads. The brake pads may be brought into interaction with the ring-shaped braking surface to produce a braking moment and/or braking force. The interaction between the brake pads and the braking surface implies that brake particles may be released from the brake pads and/or the braking surface by an abrasive friction between the brake pads and the braking surface. These particles are referred to as brake dust.

It is known from the prior art that brake dust and/or brake particles may be collected so that an emission of the brake particles in an environment may be reduced and/or minimized. Brake particles may be collected and/or caught in an active way, e.g., by so-called active suction system. Such an active suction system requires a source of energy to run to catch the brake particles. Brake particles may be collected in a passive way, e.g., by collecting particles without such a suction system.

Conventionally, the brake rotor of a disc brake may be disc-shaped.

DE 10 2006 051 972 A1 relates to a brake dust collector for a disc brake comprising a brake disc and a brake caliper clasping the latter. The brake dust collector includes a housing designed to clasp a portion of the brake disc directly adjoining the brake caliper in the main direction of rotation of the brake disc. Provided arranged in the housing is a brake dust retainer comprising a plurality of brake dust intake ports.

FR 1 341 744 discloses a disc brake having at least one brake caliper embracing a rotating brake disc and brake shoes arranged on both sides of the brake disc and controlled mechanically, hydraulically or electrically, are mounted in such a way that the brake shoes can be moved in an axial direction.

It is also known that the brake rotor has a more complex geometry, i.e., a non-ring-shaped shape. However, the brake rotor may comprise a braking surface that may be ring-shaped and the mechanisms to bring the brake pads into interaction with the braking surface may be similar to mechanisms of disc brakes with disc-shaped brake rotors. Thus, also brakes with rotors with a more complex geometry may be referred to as disc brake.

DE 3446743 discloses a disc brake and a method for its assembly.

DE 39 31 868 A1 discloses a wheel-brake arrangement is for disc brakes. The ring-shaped braking disc is formed as one piece with a brake disc carrier. The wheel rim and wheel disc are made as separate parts and in the transition area where the wheel disc merges into the rim, the wheel disc, wheel rim and brake disc carrier are all centred and joined together by means of a screw.

Such a disc brake with a brake rotor with a more complex geometry may be used to further reduce brake particles to be emitted into an environment. By limiting emission from brakes, an environmental transportation footprint may be lowered.

For example, German patent application DE 10 2024 121 821.5 describes a brake disc for a vehicle, comprising a friction ring which is supported on a brake disc carrier, wherein the friction ring and the brake disc carrier are interconnected at an outer circumference and the brake disc carrier covers the friction ring unilaterally, wherein a encapsulation element for receiving brake particle covers the friction ring.

However, even for such an encapsulated disc brake as described in DE 10 2024 121 821.5, gaps between, e.g., the encapsulation element and the rotor, to compensate for thermal expansion of components and/or to avoid a drag torque may cause that collecting the brake particles is not entirely efficient. Thus, an uncontrolled emission of brake particles may not be entirely avoided.

In the light of the prior art, it is an object of the disclosure to provide a contribution to the prior art. In particular, an object of the disclosure is to provide an encapsulated disc brake with a reduced uncontrolled emission of brake particles.

The object is solved by the subject-matter according to independent claim 1 and according to the remaining independent claims. Dependent claims relate to preferred embodiments.

According to an aspect of the present disclosure, a particle trapping arrangement for a disc brake of a vehicle, in particular utility vehicle; wherein the particle trapping arrangement comprises a brake cover adapted to be mounted on a brake carrier of the disc brake and/or on a brake caliper of the disc brake; the brake cover is adapted to at least partially encapsulate a brake rotor, the brake caliper and/or brake pads of the disc brake; the brake cover comprises a lateral surface, wherein the lateral surface is extended along a rotation axis of the brake rotor and is extended at least partially along a circumferential direction of the brake rotor; the brake cover comprises a trapping structure arranged on a radially inner side of the lateral surface; and the trapping structure comprises a plurality of radially inwardly extended projections adapted to trap brake particles.

It is realized that simple brake covers, i.e., brake covers with a smooth surface, may comprise a lower efficiency of particle capturing as particles move within the disc brake, e.g., within an encapsulated volume. Thus, moving particles may eventually escape through gaps between cover and/or other parts. On the other hand, filters may not be cost-effective and lead to a lower heat dissipation.

It is suggested that the particle trapping arrangement comprises the plurality of radially inwardly extended projections. The plurality of the projections comprises a larger surface in which brake particles may adhere compared to a surface of a simple brake cover. Thus, the capability to capture brake particles within the disc brake may be increased by providing the plurality of projections. The projections are arranged and adapted to project radially inwardly so that the projections project into, for example, the encapsulated volume of the disc brake. Thus, the projections project directly into a volume in which brake particles may move and may thus be captured. The projections of the particle trapping arrangement slow down particles that move along the cover and/or in a vicinity of the cover and make the particles stick to the projections or sediment thereon and/or in between neighboring projections. The projections increase the area to which particles may stick.

Thus, the particle trapping arrangement and able by the plurality of projections that an amount of particles that may escape an uncontrolled manner may be decreased.

Optionally, the trapping structure is brush-like. From a theoretical point of view the trapping structure and or the plurality of projections may be formed like a brush. The brush-like structure may provide an increased surface at which particles may stick and/or which may lead to particles to slow down.

Optionally, each of the projections comprises a width and a length; and the length is at least two times, better multiple times larger than the width. I.e., the projections are comparatively long and the radial direction and comprises a small cross-section perpendicular to the radial direction. This enables that large number of projections may be arranged at the inner side of the lateral surface. This may provide increased service in which particles may stick and/or which may lead to particles to slow down.

Optionally, the projections are uniformly shaped. A uniform shape of the projections may enable cost-effective production of the projections. Further, the uniform shape of projections may enable a circumferentially homogeneous capturing of particles.

Optionally, the trapping structure is integrally formed with the brake cover. This may enable a particular effective mounting of the trapping arrangement to other components of the disc brake. In other words, the trapping structure is integrated with the brake cover. Alternatively or additionally, the trapping structure is adapted to be mounted to the brake cover. This may enable that the trapping structure may be dismounted from brake cover, e.g. to exchange the trapping structure after a certain usage and/or after a certain amount of particles is scheduled.

Optionally, the projections are fibers, pins and/or nails. Therein, the fibers, pins and/or nails may be made of metal and/or steel to provide a particularly temperature resistant and corrosion resistant trapping structure. The fibers, pins and/or nails may be efficiently manufactured.

According to an aspect of the disclosure, a disc brake for a vehicle, in particular utility vehicle, is provided; wherein the disc brake comprises a brake carrier; the disc brake comprises a brake caliper arranged on the brake carrier; the disc brake comprises a brake rotor adapted to rotate relative to the brake caliper; the disc brake comprises brake pads arranged on the brake caliper and adapted to be axially moved; and the disc brake comprises the particle trapping arrangement according to the disclosure.

Optionally, the particle trapping arrangement comprises one or more of the features as described as optional and/or preferred with respect to the particle trapping arrangement to achieve a corresponding technical effect.

Optionally, the disc brake comprises an upper brake cover and a lower brake cover; and the brake cover of the particle trapping arrangement is configured as the lower brake cover. Therein, it is realized that the lower brake cover provides sufficient space to arrange the plurality of projections at the inner lateral surface. Further the space within the lower brake cover enables a preferred radially inwardly extending of projections to provide a large surface.

Optionally, the trapping structure is arranged oppositely from the brake caliper and/or the trapping structure is, in a mounted state, arranged in a lower section of the disc brake. In other words, the trapping structure is arranged so that particles may be supported by gravity to be captured by the trapping structure. This may enhance capturing and sedimentation of the brake particles.

Optionally, the brake rotor comprises a circumferentially extended shoulder; the projections are at least partially arranged, along the axis, in an overlapping manner with the shoulder and radially outwardly from the shoulder. In other words, the trapping structure is reaching in axial directional beyond an inboard rotor surface to ensure that particles which move close to the rotor will be captured by the projections. Close to a gap between the rotor and the brake cover, the trapping structure may provide a kind of a maze to decrease a likelihood of particles escaping the brake.

Optionally, the disc brake is an encapsulated disc brake. Optionally, the brake rotor of the encapsulated disc brake, the upper cover and/or the lower cover may essentially be configured as described in DE 10 2024 121 821.5.

According to an aspect of the disclosure, a braking system is provided, comprising a particle trapping arrangement according to the disclosure and/or a disc brake according to the disclosure.

Optionally, the braking system, the disc brake and/or the particle trapping arrangement of the disc brake comprises one or more optional features to achieve a technical effect corresponding therewith.

According to an aspect of the disclosure, a vehicle, in particular utility vehicle, is provided, comprising a braking system according to the disclosure, a disc brake according to the disclosure and/or a particle trapping arrangement according to the disclosure.

Optionally, vehicle, in particular utility vehicle, the braking system, the disc brake and/or the particle trapping arrangement of the disc brake comprises one or more optional features to achieve a technical effect corresponding therewith.

Further advantages and technical features and their technical effects are disclosed in the figures and the description thereof.

The figures show preferred embodiments as follows:
Fig. 1 a schematic of a vehicle, in particular utility vehicle, according to an embodiment of the disclosure;
Fig. 2 a schematic of a perspective view of a disc brake according to an embodiment of the disclosure;
Fig. 3 a schematic of a sectional view of a disc brake according to an embodiment of the disclosure;
Fig. 4 a particle trapping arrangement of a disc brake according to an embodiment of the disclosure; and
Fig. 5 a detail of a sectional view of a disc brake according to an embodiment of the disclosure.

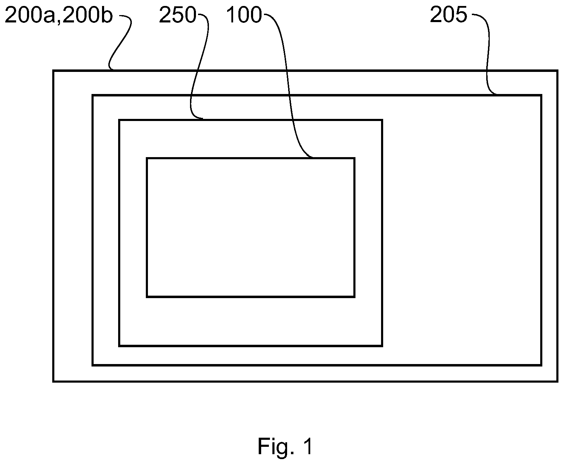

Figure 1 shows a schematic of a vehicle 200a, in particular utility vehicle 200b, according to an embodiment of the invention. In the following, the vehicle 200a, in particular utility vehicle 200b, is referred to as vehicle 200a, 200b. The vehicle 200a, 200b is a land vehicle 200a, 200b. For example, the vehicle 200a, 200b is a truck and/or towing vehicle of a vehicle combination, a bus and/or a passenger car.

The vehicle 200a, 200b comprises a braking system 205. The braking system 205 is adapted to be actuated by a driver of the vehicle 200a, 200b and/or by an autonomous driving function of the vehicle 200a, 200b to apply and/or release a braking torque. The braking system 205 may be a pneumatic braking system 205, a electronic braking system 205, a hydraulic braking system 205 and/or electronically assisted.

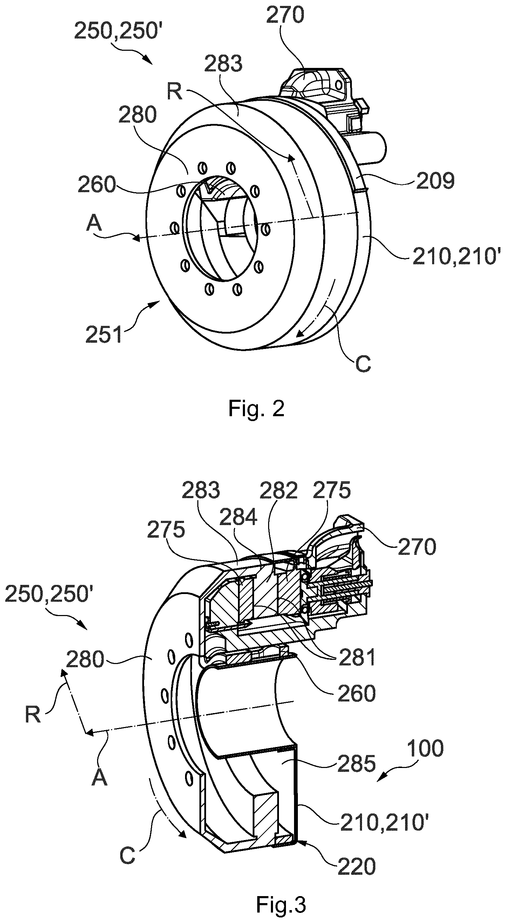

The braking system 205 comprises an encapsulated disc brake 250. The disc brake 250 comprises a particle trapping arrangement 100. Further features of the disc brake 250 and the particle trapping arrangement 100 are described under reference to Figures 2 to 5.

Figure 2 shows a schematic of a perspective view of a disc brake 250 according to an embodiment of the disclosure. The disc brake 250 of Figure 2 is an encapsulated disc brake 250' for a vehicle 200a, in particular utility vehicle 200b. Such a disc brake 250 and such a vehicle 200a, 200b is described with reference to Figure 1. Figure 2 is described under reference to Figure 1.

The disc brake 250 is essentially configured as described in DE 10 2024 121 821.5. The disc brake 250 comprises a brake carrier 260. The brake carrier 260 is mounted to a non-rotating part of the vehicle 200a, 200b.

The disc brake 250 comprises a brake caliper 270 arranged on the brake carrier 260. The brake caliper 270 may be a so-called floating brake caliper 270 and may be adapted to move upon an actuation of the disc brake 250 axially, i.e., parallel to an axis A. Alternatively, the brake caliper 270 may be fixed.

The disc brake 250 comprises a brake rotor 280 adapted to rotate relative to the brake caliper 270. The rotation of the brake rotor 280 defines a rotation direction, wherein the rotation direction relates to a rotational motion of the brake rotor 280 when the vehicle 200a, 200b drives in a forward direction. The axis A is the axis of rotation. A radial direction R is defined perpendicular to the axis A. And circumferential direction C is defined perpendicular to the axis A and to be regularity R.

Figure 3 shows a schematic of a sectional view of a disc brake 250 according to an embodiment of the disclosure. The disc brake 250 of Figure 3 is the disc brake 250 of Figure 2. Figure 3 is described under reference to Figures 1 to 2.

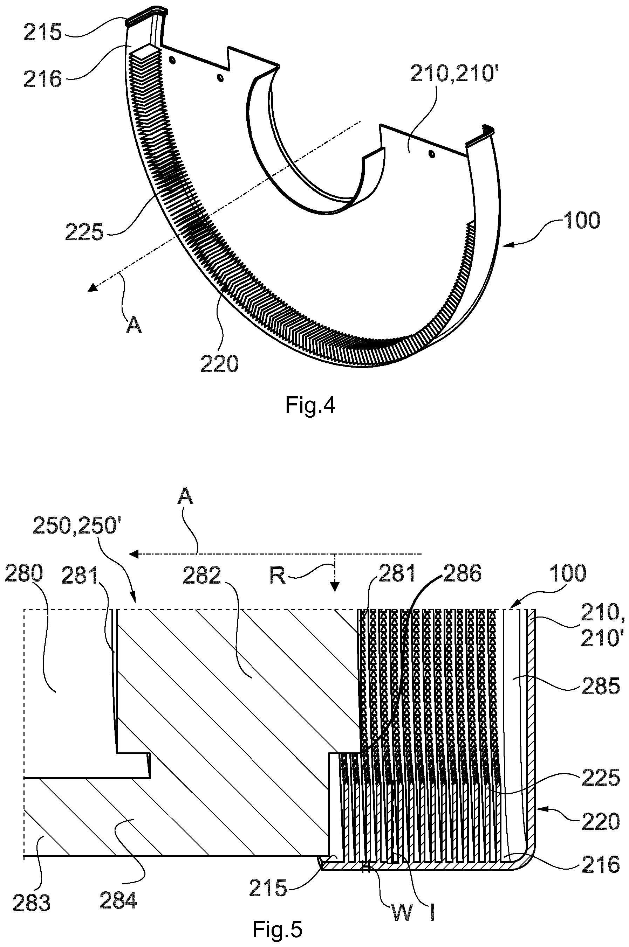

The brake rotor 280 comprising a friction ring 282 (see also Figure 5) which is supported on a brake disc carrier 283. The friction ring 282 and the brake disc carrier 283 are interconnected at an outer circumference 284 (see also Figure 5). The brake disc carrier 283 covers the friction ring 282 unilaterally. The brake rotor 280 is adapted to partially provide an encapsulated volume 285.

The disc brake 250 comprises brake pads 275 arranged on the brake caliper 270 and adapted to be axially moved. By the axial movement of the brake pads 275, the brake pads 275 are adapted to be brought into interaction with the brake rotor 280, in particular with the friction ring 282. The friction ring 282 comprises a ring-shaped braking surface 281 (see also Figure 5). The brake pads 275 and the braking surface 281 are adapted to interact with each other to achieve a braking force.

The disc brake 250 comprises an upper brake cover 209 and a lower brake cover 210. Each of the upper brake cover 209 and the lower brake cover 210 are made of sheet metal. The upper brake cover 209 is mounted to the brake carrier 260. The upper brake cover 209 is arranged, along the axis A, between the brake rotor 280 and the brake caliper 270. The upper brake cover 209 is, in the mounted state, arrange above the lower brake cover 210. The lower brake cover 210 is mounted to the brake carrier 260 and/or the upper brake cover 209.

The encapsulated volume 285 is encapsulated by the brake rotor 280, the lower brake cover 210, the upper brake cover 209, the brake caliper 270 and the brake carrier 260. The brake pads 275 are arranged within the encapsulated volume 285. Thus, brake particles may be created within the encapsulated volume 285.

The disc brake 250 comprises the particle trapping arrangement 100. Further features of the disc brake 250 and of the particle trapping arrangement 100 are described with reference to Figures 4 and 5.

Figure 3 illustrates that the brakes rotor 280 encapsulated the encapsulated volume 285 circumferentially and delimits the encapsulated volume 285 radially.

Figure 4 shows a particle trapping arrangement 100 of a disc brake 250 according to an embodiment of the disclosure. The particle trapping arrangement 100 of Figure 4 is a particle trapping arrangement 100 for a disc brake 250 of a vehicle 200a, in particular utility vehicle 200b. Such a vehicle 200a, 200b is described with reference to Figure 1 and such a disc brake 250 is described with reference to Figures 2 and3. Figure 4 is described in reference to Figures 1 to 3.

The particle trapping arrangement 100 comprises a brake cover 210 adapted to be mounted on a brake carrier 260 of the disc brake 250 and/or on a brake caliper 270 of the disc brake 250. For example, if the brake caliper 270 is a floating caliper, the brake cover 210 may be mounted on the brake carrier 260. If the brake caliper 270 is a fixed caliper, the brake cover 210 may be mounted to the brake caliper 270.

The brake cover 210 is adapted to at least partially encapsulate a brake rotor 280, the brake caliper 270 and/or brake pads 275 of the disc brake 250. As also illustrated in Figure 3, the brake cover 210 is adapted in combination with the brake rotor 280 to provide the encapsulated volume 285.

The brake cover 210 comprises a lateral surface 215. The lateral surface 215 is extended along the rotation axis A of the brake rotor 280 and is extended at least partially along T circumferential direction C of the brake rotor 280. In other words, the lateral surface 215 may be described as a section of a lateral surface of a cylinder with the axis A as an axis of the cylinder.

The brake cover 210 comprises a trapping structure 220 arranged on a radially inner side 216 of the lateral surface 215. In other words, the radially inner side 216 is arranged to face the axis A.

The trapping structure 220 comprises a plurality of radially inwardly extended projections 225 adapted to trap brake particles. The projections 225 are thus arranged and distributed circumferentially and along the axis A on the inner side 216 of the lateral 215. Each of the projections 225 points towards the axis A.

The disc brake 250 comprises the upper brake cover 209 and the lower brake cover 210'; and the brake cover 210 of the particle trapping arrangement 100 is configured as the lower brake cover 210' (see Figure 3). The trapping structure 220 is arranged oppositely from the brake caliper 270 and/or the trapping structure 220 is, in a mounted state, arranged in a lower section 251 of the disc brake 250.

Figure 5 shows a detail of a sectional view of a disc brake 250 according to an embodiment of the disclosure. The disc brake 250 of figure 5 comprises a particle trapping arrangement 100. The disc brake 250 and the particle trapping arrangement 100 are described with reference to Figures 1 to 4. Figure 5 is described under reference to figures 1 to 4.

Each of the projections 225 comprises a width w and a length l; and the length l is multiple times larger than the width w. The length l is the extension of the projection 225 in the radial direction R. The trapping structure 220 is brush-like. I.e., the distance between neighboring projections 225 is comparatively small. In other words, the distance between neighboring projections 225 is smaller than the length I.

The projections 225 are uniformly shaped. I.e., each of the projections 225 has the same shape. Furthermore, the projections 225 are uniformly distributed on the inner side 216 of the lateral surface 215.

The brake rotor 280 comprises a circumferentially extended shoulder 286. The shoulder 286 provides a step in the contour of the friction ring 282. The shoulder 286 may define the breaking surface 281 as being radially inwardly extended from the shoulder 286. The projections 225 are at least partially arranged, along the axis A, in an overlapping manner with the shoulder 286 and radially outwardly from the shoulder 286. I.e. the projections 225 overlap along the axis A the breaking surface 281. Thus brake particles may directly move into the trapping structure 220.

The projections 225 are pins. In another embodiment (not shown) the projections 225 are fibers, i.e. more flexible than pins, and/or the projections 225 are nails.

The trapping structure 220 is integrally formed with the brake cover 210. In another embodiment (not shown) the trapping structure 220 is adapted to be mounted to the brake cover 210. For example, the trapping structure 220 may be fixed by a screw or a clip collection to the brake cover 210.

### List of reference signs (part of the description)

- 100: particle trapping arrangement

- 200a: vehicle
- 200b: utility vehicle

- 205: braking system

- 209: upper brake cover
- 210: brake cover
- 210': lower brake cover
- 215: lateral surface

- 220: trapping structure
- 225: projection

- 250: disc brake
- 250': encapsulated disc brake
- 251: lower section
- 260: brake carrier
- 270: brake caliper
- 275: brake pad
- 280: brake rotor
- 281: braking surface
- 282: friction ring
- 283: brake disc carrier
- 284: outer circumference
- 285: encapsulated volume
- 286: shoulder

- A: axis
- C: circumferential direction
- I: length
- R: radial direction

- w: width

## Claims

1. Particle trapping arrangement (100) for a disc brake (250) of a vehicle (200a), in particular utility vehicle (200b); wherein
- the particle trapping arrangement (100) comprises a brake cover (210) adapted to be mounted on a brake carrier (260) of the disc brake (250) and/or on a brake caliper (270) of the disc brake (250);
- the brake cover (210) is adapted to at least partially encapsulate a brake rotor (280), the brake caliper (270) and/or brake pads (275) of the disc brake (250);
- the brake cover (210) comprises a lateral surface (215), wherein the lateral surface (215) is extended along a rotation axis (A) of the brake rotor (280) and is extended at least partially along a circumferential direction (C) of the brake rotor (280); **characterized in that**,
- the brake cover (210) comprises a trapping structure (220) arranged on a radially inner side (216) of the lateral surface (215); and
- the trapping structure (220) comprises a plurality of radially inwardly extended projections (225) adapted to trap brake particles.

2. Particle trapping arrangement (100) as claimed in claim 1, wherein
- the trapping structure (220) is brush-like.

3. Particle trapping arrangement (100) as claimed in claim 1 or 2, wherein
- each of the projections (225) comprises a width (w) and a length (I); and
- the length (I) is at least two times times larger than the width (w).

4. Particle trapping arrangement (100) as claimed in any one of the preceding claims, wherein
- the projections (225) are uniformly shaped.

5. Particle trapping arrangement (100) as claimed in any one of the preceding claims, wherein
- the trapping structure (220) is integrally formed with the brake cover (210) and/or
- the trapping structure (220) is adapted to be mounted to the brake cover (210).

6. Particle trapping arrangement (100) as claimed in any one of the preceding claims, wherein
- the projections (225) are fibers, pins and/or nails.

7. Disc brake (250) for a vehicle (200a), in particular utility vehicle (200b); wherein
- the disc brake (250) comprises a brake carrier (260),
- the disc brake (250) comprises a brake caliper (270) arranged on the brake carrier (260);
- the disc brake (250) comprises a brake rotor (280) adapted to rotate relative to the brake caliper (270);
- the disc brake (250) comprises brake pads (275) arranged on the brake caliper (270) and adapted to be axially moved; and
- the disc brake (250) comprises the particle trapping arrangement (100) as claimed in any one of the preceding claims.

8. Disc brake (250) as claimed in claim 7, wherein
- the disc brake (250) comprises an upper brake cover (209) and a lower brake cover (210'); and
- the brake cover (210) of the particle trapping arrangement (100) is configured as the lower brake cover (210').

9. Disc brake (250) as claimed in claim 7 or 8, wherein
- the trapping structure (220) is arranged oppositely from the brake caliper (270) and/or
- the trapping structure (220) is, in a mounted state, arranged in a lower section (251) of the disc brake (250).

10. Disc brake (250) as claimed in any one of claims 7 to 9, wherein
- the brake rotor (280) comprises a circumferentially extended shoulder (286);
- the projections (225) are at least partially arranged, along the axis (A), in an overlapping manner with the shoulder (286) and radially outwardly from the shoulder (286).

11. Disc brake (250) as claimed in any one of claims 7 to 10, wherein
- the disc brake (250) is an encapsulated disc brake (250').

12. Pneumatic braking system (205), comprising a particle trapping arrangement (100) as claimed in any one of claims 1 to 6 and/or a disc brake (250) as claimed in any one of claims 7 to 11.

13. Vehicle (200a), in particular utility vehicle (200b), comprising a pneumatic braking system (205) as claimed in claim 12, a disc brake (250) as claimed in any one of claims 7 to 11 and/or a particle trapping arrangement (100) as claimed in any one of claims 1 to 6.
